# FASCICULE DE BREVET EUROPEEN

(11) **EP 1 343 737 B1**
(45) Date de publication et mention de la délivrance du brevet: **04.01.2012**
(21) Numéro de dépôt: 01999541.4
(22) Date de dépôt: 26.11.2001
(51) Int. Cl.: C04B 38/06, B01D 53/32, C01B 13/02, H01M 4/48

(54) **PROCEDE DE PREPARATION D'UN MATERIAU CERAMIQUE DE FAIBLE EPAISSEUR A GRADIENT DE POROSITE SUPERFICIELLE CONTROLE, MATERIAU CERAMIQUE OBTENU**
VERFAHREN ZUR HERSTELLUNG VON EINEM DÜNNEN KERAMISCHEN MATERIAL MIT EINEM KONTROLLIERTEN OBERFLÄCHENPOROSITÄTSGRADIENTEN, DARAUS HERGESTELLTES KERAMISCHES MATERIAL DIESES MATERIAL ENTHALTENDE ELEKTROCHEMISCHE ZELLE UND KERAMISCHE MEMBRAN UND VERWENDUNG DES MATERIALS, DER ZELLE UND DER MEMBRAN
METHOD FOR PREPARING A THIN CERAMIC MATERIAL WITH CONTROLLED SURFACE POROSITY GRADIENT, AND RESULTING CERAMIC MATERIAL

(30) Priorité: 07.12.2000 FR 0015919
(43) Date de publication de la demande: 17.09.2003
(73) Titulaire: L'AIR LIQUIDE, Société Anonyme pour l'Etude et l'Exploitation des Procédés Georges Claude, 75007 Paris (FR)
(72) Inventeur: CHARTIER, Thierry, F-87220 Feytiat (FR); GUILLOTIN, François, F-59770 Marly (FR)
(74) Mandataire: Conan, Philippe Claude
(86) Numéro de dépôt international: PCT/FR2001/003716
(87) Numéro de publication internationale: WO 2002/046122

(56) Documents cités:
- EP-A- 0 212 230
- WO-A-95/32050
- WO-A-98/48918
- FR-A- 2 780 717
- US-A- 5 030 396
- US-B1- 6 264 807
- PATENT ABSTRACTS OF JAPAN vol. 1997, no. 09, 30 septembre 1997 (1997-09-30) & JP 09 132459 A (SHIN ETSU CHEM CO LTD), 20 mai 1997 (1997-05-20)

## Description

L'invention a pour objet un nouveau procédé de préparation d'un matériau céramique de faible épaisseur à gradient continu de porosité superficielle contrôlé et sa mise en oeuvre pour préparer des cellules électrochimiques conductrices par ions oxyde. L'objet se caractérise par une variation continue de porosité de 0% à environ 80 % de faibles épaisseurs.

Les céramiques poreuses présentent des propriétés physico-chimiques, que ce soit la stabilité thermique, la stabilité chimique, la biocompatibilité ou la résistance mécanique, qui en font de bons candidats à des applications diverses telles que les membranes de filtration, les capteurs, les jonctions céramiques / métal, les biomatériaux, la conservation d'énergie, l'isolation thermique ou la catalyse. Ces matériaux sont utilisés notamment pour leur faible densité, leur grande surface d'échange ou leur perméabilité élevée grâce à leur porosité ouverte.

Comme techniques de création de porosité dans le matériau céramique, il y a :
le frittage incomplet de particules céramiques,
l'introduction de porosité par émulsion du matériau avant frittage,
l'utilisation de corps porogènes éliminés avant frittage,
les opérations de formage comme l'extrusion, le moulage par injection, le prototypage rapide, ou
l'utilisation de fibres céramiques.

Ces méthodes sont répertoriées dans Roy W. Rice, "Porosity of ceramics", Marcel Dekker, 1998, pp 20-21.

Le sous-frittage ou frittage incomplet, d'une poudre céramique ou d'un mélange de poudres céramiques de différentes tailles de grains, ne permet pas d'atteindre une porosité supérieure à 50%.

L'utilisation de corps porogènes, éliminés par exemple, par pyrolyse avant frittage et laissant des pores en négatif dans la céramique, est un des procédés les plus appropriés pour l'élaboration de matériaux dont la porosité est contrôlée en termes de fraction volumique, de forme et de répartition en taille des pores. L'incorporation de corps porogènes particulaires, comme l'amidon, les latex, le graphite ou les résines, dans des suspensions ou pâtes céramiques, permet d'obtenir une porosité répartie de façon homogène dans une matrice céramique dense. Selon le procédé de mise en forme, le pressage, le coulage en moule, le coulage en bande, l'extrusion ou le moulage par injection, on obtient un matériau de géométrie plane, tubulaire ou de forme plus complexe.

Plusieurs variantes de cette technique d'incorporation de particules porogènes dans une suspension céramique, sont décrites dans les brevets américains publiés sous les numéros US 4,777,153, US 4,883,497, US 5,762,737, US 5,846,664 et US 5,902,429 ; et dans les publications de Lyckfeldt et al; et Apté et al (O. Lyckfeldt, E. Lidén, R. Carlsson, "Processing of thermal insulation materials with controlled porosity", Low expansion materials, pp 217-229 ; S. F. Corbin, P. S. Apté, J. Am. Ceram. Soc., 82, 7, 1999, pp 1693-1701). Apté et al. décrivent notamment un procédé utilisant le coulage en bande de suspensions céramiques contenant des particules porogènes et la thermocompression de bandes pour obtenir après frittage un matériau poreux à gradient discret de porosité.

Le corps porogène peut aussi être une préforme imprégnée par une suspension céramique (poudre céramique + solvant + additifs organiques).

L'infiltration de mousses polymères par une suspension céramique, permet d'obtenir des céramiques massives ayant une porosité ouverte importante. Dans ce cas, la porosité totale est directement liée à la structure de la mousse, mais cette technique ne permet pas d'atteindre des tailles de pores microniques et elle ne peut pas être mise en oeuvre pour préparer des matériaux de faible épaisseur.

US 4,780,437 divulgue un procédé de préparation de matériaux poreux de faible épaisseur, par infiltration d'un flocage de fibres porogènes pyrolysables par une suspension céramique. Les matériaux obtenus par ce procédé présentent une porosité anisotrope orientée.

EP 0 212 230 divulgue un procédé de préparation de filtre céramique permettant d'obtenir une porosité homogène dans l'ensemble du filtre.

Or, la maîtrise de la structure en tant que système dense ou système poreux à gradient de porosité et la maîtrise de la microstructure notamment la distribution en taille des particules et des pores, d'un objet céramique est un facteur déterminant pour ses propriétés intrinsèques et pour ses applications en termes de performances, de reproductibilité, de durée de vie et de coût.

Aujourd'hui, on ne sait pas fabriquer une membrane céramique de faible épaisseur, de l'ordre de quelques centaines de micromètres, possédant un gradient continu de porosité superficielle contrôlé, allant de 0 % (céramique dense) à environ 80% (système très poreux) en une seule opération. Tous les objets réalisés selon les divers procédés connus, ont des gradients discrets ou discontinus de porosité contrôlée. Or la présence, même pour un matériau identique, de ces gradients discrets de porosité, peuvent engendrer aux différentes interfaces, des phénomènes de décollement et de délaminage des couches, notamment à cause des différences de coefficients d'expansion thermique entre ces zones. Il en découle une dégradation rapide de l'objet.

Le fait de pouvoir réaliser un gradient continu de porosité contrôlé d'un matériau, doit permettre d'éviter la succession d'interfaces entre les couches de porosité différente et par conséquent d'éviter ces phénomènes de dégradation.

Dans le cas de l'élaboration de cellules électrochimiques constituées d'un électrolyte solide dense et d'électrodes, dites volumiques, comme celles décrites dans la demande internationale de brevet WO 95/32050, le fait de maîtriser une microstructure avec un gradient continu de porosité superficielle contrôlé doit permettre :
De favoriser les compatibilités physique et chimique entre l'électrode volumique et l'électrolyte solide dense et d'améliorer ainsi la cohésion de l'interface entre ces deux matériaux ;
De limiter les coûts énergétiques liés aux surtensions interfaciales ;
De favoriser la diffusion, la dissociation et la recombinaison de l'oxygène dans tout l'édifice en trols dimensions de la structure poreuse électrode volumique/électrolyte solide dense, par la délocalisation en volume de manière homogène de la réaction d'électrode ;
Les cellules électrochimiques ainsi formées ont des performances électrochimiques améliorées en termes de performances électrochimiques (densité de courant appliquée par unité de surface), de durée de vie, de vieillissement et de coût énergétique.

C'est pourquoi, l'invention a pour objet, un procédé de préparation d'un matériau céramique de faible épaisseur et à gradient continu de porosité superficielle contrôlé, caractérisé en ce qu'il comprend :
a) une étape (P) de préparation d'un substrat porogène poreux et d'épaisseur contrôlée ;
b) une étape (Q) de préparation d'une suspension céramique ;
c) une étape (A) d'infiltration du substrat porogène poreux, par ladite suspension d'un matériau céramique ;
d) une étape (B) d'évaporation du solvant, pour former une structure composite (S) porogène/céramique solide ;
e) une étape de découpe (B') de la structure composite (S) issue de l'étape (B) en éléments de structure (s) ;
f) une étape (E) de formation d'un ensemble à partir de deux éléments (s1) et (s2) obtenus à l'étape (B'), dans lequel lesdits éléments sont empilés tête-bêche, leur faces denses étant adjacentes ;
g) une étape de thermocompression de l'ensemble obtenu à l'étape (E) ;
h) une étape (C) de déliantage, et
i) une étape (D) de frittage.

Dans la définition du procédé objet de la présente invention, par faible épaisseur, on entend généralement une épaisseur comprise entre environ 0,05 mm et environ 2 mm et plus particulièrement, entre environ 0,25 mm et environ 1 mm.

Dans la définition du procédé objet de la présente invention, par gradient continu de porosité superficielle contrôlé, on indique que la porosité dudit matériau varie d'une valeur tendant vers 0%, au niveau de l'une de ses faces (appelée surface dense), jusqu'à une valeur tendant vers environ 80% au niveau de sa face opposée (appelée face poreuse).

Par porosité superficielle, on entend la porosité à la surface du composant accessible à un fluide, par exemple à un gaz pour le fonctionnement d'une cellule électrochimique ou à un liquide, comme une suspension ou un métal fondu, pour une infiltration.

Lorsque le matériau céramique est destiné à la fabrication d'une membrane permettant le passage d'ions oxygène en son sein, la porosité du matériau au niveau de la face dense est de l'ordre de 0%, et est inférieure ou égale à 80%, plus particulièrement égale à environ 60% au niveau de la face poreuse.

Par substrat porogène poreux, on désigne un empilement poreux de particules porogènes solides ou d'un mélange de particules porogènes solides, de taille et/ou de forme et/ou de nature identique ou différente. La porosité du substrat est comprise entre environ 20 % et environ 90% et de préférence supérieure ou égale à 30 % et inférieure ou égale à 70 % et tout particulièrement environ égale à 40 %. La porosité du substrat porogène poreux correspond aux interstices entre le ou les porogènes, que ce soient des particules, des plaquettes ou des fibres. Cette porosité d'empilement interconnectée, appelée aussi porosité ouverte, permet l'infiltration de la suspension céramique.

Par porogène, on désigne tout matériau susceptible d'être éliminé, par décomposition thermique lors de l'étape de déliantage préalable au frittage en laissant des pores dans le matériau obtenu à l'issue de cette étape et sans laisser de résidus. Comme porogène, on préfère utiliser les polymères existant sous forme particulaire et de forme relativement isotrope comme, par exemple, des cires de polypropylène micronisées (par exemple, PropylTex™270S ou PropylTex™325S de MICRO POWDERS, Inc.), des polyamides (par exemple ORGASOL™ de ELF-ATOCHEM), des latex, du polytétrafluoroéthylène ou des sphères de polystyrène. Comme porogènes, on utilise également des fibres de cellulose (par exemple ARBOCEL™BE600-10 de Rettenmeier), des amidons (par exemple l'amidon de maïs standard, l'amidon de blé standard SP ou la fécule de pomme de terre de ROQUETTE FRERES, amidon de riz REMYRISE™DR de REMY) ou du graphite

Par suspension céramique, on indique, dans le cadre de la présente invention, que la suspension a une viscosité et un comportement rhéologique adaptés à l'infiltration dans le substrat porogène poreux, de manière à induire un gradient de remplissage des pores continu, tendant de 0% de remplissage des pores, au niveau de la face opposée à l'infiltration, jusqu'à environ 80% au niveau de la face d'infiltration.

L'étape (A) d'infiltration est réalisée par exemple, par la technique dite du coulage en bande. Cette technique est particulièrement appropriée, lorsque l'on souhaite obtenir un matériau céramique de forme planaire. On peut aussi la mettre en oeuvre pour réaliser des tubes par enroulement, par exemple autour d'un mandrin, de feuilles céramiques denses et poreuses.

Le gradient d'infiltration du substrat porogène poreux par la suspension céramique, est obtenu en contrôlant sa viscosité et son comportement rhéologique. L'augmentation de la proportion de phase organique dans la suspension, permettant l'élaboration du substrat porogène, diminue la porosité de celui-ci, par fermeture des interstices entre les entités de porogène et rend plus difficile l'infiltration par une suspension céramique de viscosité donnée. L'augmentation de la viscosité ou du caractère rhéofluidifiant de la suspension céramique, rend également plus difficile l'infiltration du substrat porogène poreux.

L'étape (B) d'évaporation du solvant est si nécessaire réalisée par circulation d'un courant d'air chaud.

L'étape (C) de déliantage consiste à éliminer les porogènes ainsi que les différents auxiliaires organiques utilisés pour la mise en oeuvre.

L'étape (D) de frittage consiste en un traitement thermique de consolidation et de rigidification du matériau mis en forme. Au cours de ce traitement thermique, des phénomènes de diffusion, thermiquement activés, sont responsables de transports de matière et, par suite, de densification et d'un grossissement des grains du matériau. Ce traitement consiste généralement à monter en température jusqu'à la température optimale de frittage du matériau considéré. Par température optimale de frittage, on désigne la température, inférieure à la température de fusion ou de décomposition du matériau, pour laquelle la densification est maximale et la croissance des grains limitée. Dans le cas de matériaux de la famille des composés BIMEVOX, la température de frittage est comprise entre 700 et 850°C et on préférera une taille moyenne des grains après frittage, inférieure à 5 µm et de préférence inférieure à 3 µm.

Les étapes (C) et (D) peuvent être réalisées au cours d'une même opération en une seule étape (C') appelée étape de déliantage - frittage.

La technique de coulage en bande est mise en oeuvre au moyen d'un banc de coulage.

Dans le procédé tel que défini précédemment, les éléments (s) obtenus sont de préférence de forme, et de dimensions identiques.

Les dimensions de la matrice de thermocompression de l'ensemble (E) peuvent être adaptées aux dimensions des éléments s, (s₁) et (s₂).

L'opération de thermocompression de l'ensemble (E) consiste généralement en un pressage sous une pression d'environ 50MPa, pendant 5 à 10 minutes, à une température supérieure à la température de transition vitreuse (Tg) de la phase organique mise en oeuvre, comprenant le liant et le plastifiant. Elle est généralement inférieure à 100°C.

L'étape préalable (P) de préparation du substrat porogène poreux solide comprend plus particulièrement :
- Une étape (Pₐ), de préparation d'une suspension d'un ou plusieurs porogènes solides dans un solvant, en présence si nécessaire, de liants, de plastifiants et/ou de dispersants et avec ajout si désiré, d'une faible proportion de particules céramiques en faible proportion à ladite suspension.
- Une étape (P_{b}), de coulage de ladite suspension formée à l'étape (Pₐ) sur une surface plane, et
- Une étape (P_{c}) d'évaporation dudit solvant.

Comme solvant, on choisit un liquide inerte vis à vis des porogènes et notamment un liquide dans lequel les porogènes sont insolubles.

Il s'agit en général d'un solvant organique, par exemple du méthanol, de l'éthanol, de l'isopropanol ou du butanol, de méthyl éthyl cétone (MEK) ou d'un mélange éthanol + MEK.

Comme dispersant, on choisit un composé ou un mélange de composés conduisant à la répulsion électrostatique et/ou stérique des porogènes, que ce soient des particules, des fibres ou des plaquettes, dans le solvant. On choisit de préférence un composé ou un mélange de composés de la famille des esters phosphoriques, comme le BEYCOSTAT™ A259, ou des esters fluoroalkylés ou les éthoxylates d'alkyle.
- Comme liant, on choisit un composé ou un mélange de composés, chimiquement compatible avec les autres constituants de la suspension et du matériau céramique. On choisit de préférence, un composé ayant une faible température de transition vitreuse T_{g}. On choisit plus particulièrement un composé soluble dans le solvant choisi. Parmi les composés ou mélanges de composés disponibles dans le commerce, il y a les polyacryliques tels que les DEGALAN™ ou les polyvinyliques tels que les polyvinylbutyrals.
- Comme plastifiant, on choisit un composé ou un mélange de composés disponibles dans le commerce et connus comme possédant cette propriété, tel que des phtalates, comme le phtalate de dibutyle ou le phtalate de butyle et de benzyle ou bien les polyéthylèneglycols. On choisit plus particulièrement un composé soluble dans le solvant choisi.

Comme support de coulage, on choisit généralement une surface en verre, un acier inoxydable ou un film plastique tel que par exemple, un film en Mylar^{™} ou en polypropylène.

L'ajout d'un agent liant et /ou d'un agent plastifiant, en faible proportion, dans la suspension de porogène, permet d'obtenir un substrat polymère poreux flexible et manipulable après évaporation du solvant et ne se détériorant pas lors de l'infiltration de la suspension céramique. Ces composés forment un pontage entre les porogènes.

De façon générale, les constituants de la suspension préparée à l'étape (Pₐ) sont choisis, pour qu'après évaporation du solvant, le substrat porogène formé n'adhère pas au support sur lequel est réalisé le coulage de ladite suspension et qu'il ne se fissure pas.

Si nécessaire, l'étape (P_{b}) est précédée d'une étape de désagglomération (P_{d}), des particules porogènes dans ladite suspension formée à l'étape (Pₐ), suivie éventuellement d'une étape (Pₑ), de désaération de ladite suspension.

L'étape de désagglomération consiste généralement en la rupture des agglomérats par une action mécanique comme le broyage, par exemple par attrition, ou avec des ultrasons.

L'étape de désaération consiste généralement en l'élimination des bulles d'air présentes dans la suspension, par exemple par application d'un vide, par rotation en jarre ou par tamisage.

L'étape (P_{b}) de coulage, est réalisée par la technique dite du coulage en bande. Cette technique est particulièrement appropriée, lorsque l'on souhaite obtenir un matériau céramique de forme planaire et de faible épaisseur. On peut aussi la mettre en oeuvre pour réaliser des tubes par enroulement, par exemple autour d'un mandrin, de feuilles céramiques denses et poreuses.

La technique de coulage en bande est mise en oeuvre avec un banc de coulage. Un tel dispositif est disponible dans le commerce

L'étape préalable (Q) de préparation d'une suspension céramique dans un solvant comprend plus particulièrement :
- une étape (Qₐ), de préparation d'une suspension de particules de céramique solides dans un solvant, en présence d'un dispersant :
- une étape (Q_{b}) d'addition dans la suspension préparée à l'étape (Qₐ), d'un liant et d'un plastifiant.

Comme solvant, on choisit un liquide permettant la solubilisation des auxiliaires organiques de mise en oeuvre, comme les agents dispersants, les liants ou les plastifiants. Il s'agit en général d'un solvant organique par exemple du méthanol, de l'éthanol, de l'isopropanol ou du butanol, de méthyl éthyl cétone (MEK) ou d'un mélange éthanol + MEK.

Comme dispersant, on choisit un composé ou un mélange de composés, chimiquement compatible avec les autres constituants de la suspension et du matériau céramique. On choisit de préférence un composé ou un mélange de composés de la famille des esters phosphoriques, comme le BEYCOSTAT™ A259, des esters fluoroalkylés ou des éthoxylates d'alkyles.
- Comme liant, on choisit un composé ou un mélange de composés chimiquement compatible avec les autres constituants de la suspension et du matériau céramique. On choisit de préférence, un composé ayant une faible température de transition vitreuse T_{g}. On choisit plus particulièrement un composé soluble dans le solvant choisi. Parmi les composés ou mélanges de composés disponibles dans le commerce, il y a les polyacryliques, tels que les DEGALAN™ ou les polyvinyliques, tels que les polyvinylbutyrals.
- Comme plastifiant, on choisit un composé ou un mélange de composés disponibles dans le commerce et connus comme possédant cette propriété, tel que des phtalates, comme le phtalate de dibutyle ou le phtatale de butyle et de benzyle ou encore les polyéthylèneglycols. On choisit plus particulièrement un composé soluble dans le solvant choisi.

Cette préparation peut comprendre une étape de désagglomération (Q_{c}), de la suspension préparée à l'étape (Qₐ), avant qu'elle soit soumise à l'étape (Q_{b}). Cette étape de désagglomération consiste généralement en la rupture des agglomérats par une action mécanique comme le broyage, par exemple par attrition ou par des ultrasons.

Pour une bonne mise en oeuvre du procédé objet de la présente invention, on préfère que la poudre de matériau céramique, dont on prépare la suspension à l'étape Qₐ, consiste en des particules de forme équiaxe avec une distribution en taille serrée, centrée autour d'une valeur moyenne comprise entre 0,1 µm et 10 µm de préférence entre 0,2 µm et 1 µm.

Cette préparation peut aussi comprendre une étape de (Q_{d}) de désaération de la suspension issue de l'étape (Q_{b}).

Cette étape de désaération consiste généralement en l'élimination des bulles d'air présentes dans la suspension par exemple par application d'un vide, par rotation en jarre ou par tamisage.

Le matériau céramique constitutif de la suspension céramique est généralement choisi parmi les oxydes céramiques dopés qui, à la température d'utilisation, sont sous forme d'un réseau cristallin présentant des lacunes en ions oxydes et plus particulièrement sous forme de phase cubique, de phase fluorite, de phase pérovskite, de type Aurivillius, de phase brown-millerite ou de phase pyrochlore. Parmi ceux-ci, il y a :
(a) - Les oxydes de formule (I) :

   (MₐO_{b})₁₋ₓ (R_{c}O_{d})ₓ (I),

   dans laquelle M représente au moins un atome trivalent ou tétravalent principalement choisi parmi, le bismuth (Bi), le cérium (Ce), le zirconium (Zr), le thorium (Th), le gallium (Ga) ou l'hafnium (Hf), a et b sont tels que la structure MₐO_{b} est électriquement neutre, R représente au moins un atome divalent ou trivalent choisi principalement parmi le magnésium (Mg), le calcium (Ca) ou le baryum (Ba), le strontium (Sr), le gadolinium (Gd), le scandium (Sc), l'ytterbium (Yb), l'yttrium (Y), le samarium (Sm) l'erbium (Er), l'indium (In), le niobium (Nb) ou le lanthane (La), c et d sont tels que la structure R_{c}O_{d} est électriquement neutre, x est généralement compris entre 0,05 et 0,30 et plus particulièrement, entre 0, 075 et 0,15.
   Comme exemples d'oxyde de formule (I), il y a les zircones, les gallates ou les oxydes de cérium stabilisés comme :
   - La zircone stabilisée de formule (Ia) :

      (ZrO₂)₁₋ₓ (Y₂O₃)ₓ, (Ia),

      dans laquelle x est compris entre 0,05 et 0,15.
(b) - Les matériaux pérovskites, de formule (II) :

   M₁M₂O₃, (II)

   dans laquelle, M₁ représente un ou plusieurs atomes choisis dans les familles des alcalino terreux, des lanthanides et des actinides et plus particulièrement parmi La, Ce, Pr, Nd, Pm, Sm, Eu, Gd, Tb, Dy, Ho, Er, Tm, Yb, Lu, Y, ou les Mg, Ca, Sr ou Ba, M₂ représente un ou plusieurs atomes choisis dans les métaux de transition, plus particulièrement parmi Sc, Ti, V, Cr, Mn, Fe, Co, Ni, Cu ou Zn.
   Comme exemples d'oxyde de formule (II), il y a l'oxyde de lanthane et de nickel (LaNiO₃), les manganites - lanthane - calcium (CaᵤLaᵥMnO_{w}), les manganites - lanthane - strontium (LaᵤSrᵥMnO_{w}), les cobaltites - lanthane - strontium (LaᵤSrᵥCoO_{w}), les cobaltites - lanthane - calcium (CaᵤLaᵥCoO_{w}), les cobaltites - gadolinium - strontium (GdᵤSr_{y}CoO_{w}), les chromites - lanthane - strontium (LaᵤSr-ᵥCrO_{w}), les ferrites - lanthane - strontium, (LaᵤSrᵥFeO_{w}) ou les ferrocobaltites - lanthane - strontium (LaᵤSrᵥCo_{d}Fe_{c}O_{w}), composés pour lesquels les sommes u + v et c + d sont égales à 1 et w est tel que la structure en cause est électriquement neutre. Il y a plus particulièrement un composé de formule (IIa) :

   La_{0,6}Sr_{0,4}Co_{0,8}Fe_{0,2}O_{w} (IIa),

   dans laquelle w est tel que la structure de formule (IIa), est électriquement neutre.
(c) - Les composés de la famille de BIMEVOX, de formule (III) :

   (Bi₂₋ₓMₓO₂) (V_{1-y}M'_{y}O_{z}) (III)

   dans laquelle M représente un ou plusieurs métaux de substitution du bismuth, choisi(s) parmi ceux ayant un nombre d'oxydation inférieur ou égal à 3, M' représente un ou plusieurs éléments de substitution du vanadium choisi(s) parmi ceux ayant un nombre d'oxydation inférieur, égal ou supérieur à 5, les valeurs limites de x, y et donc z étant dépendants de la nature des éléments de substitution M et M'. Comme exemples d'oxyde de formule (III), il y a :
   - Les composés de formule (IIIa) :

      (Bi₂O₂) (V_{1-y}M'_{y}O_{z}) (IIIa)

      correspondant à la formule (III) dans laquelle x est égal à 0 et y est différent de 0 et M' est avantageusement sélectionné parmi les métaux alcalins, alcalino-terreux, les métaux de transition, ou encore les éléments des groupes III à V de la classification périodique, ou parmi les terres rares.

Quand M' représente un métal de transition il s'agit plus particulièrement du zinc (Zn), du cuivre (Cu), du nickel (Ni), du cobalt (Co), du fer (Fe), du manganèse (Mn) ou du cadmium (Cd).

Quand M' est un métal alcalino-terreux, il s'agit notamment du calcium (Ca), du strontium (Sr) ou du baryum (Ba).

Cependant M' peut aussi représenter un métal ayant un degré d'oxydation égal à 3, tel que l'antimoine (Sb), l'indium (In) ou l'aluminium (Al), un métal ayant un degré d'oxydation égal à 4. tel que le titane (Ti), l'étain (Sn) ou le ruthénium (Ru) ou un élément de substitution de degré d'oxydation égal à 5 tel que le niobium (Nb), le tantale (Ta) ou le phosphore (P).

M' peut aussi représenter un métal alcalin comme le sodium (Na) ou peut représenter le plomb (Pb) au degré d'oxydation 2.

Comme exemples de composés de formule (IIIa) il y a plus particulièrement Bi₂V_{0,9}Co_{0,1}O_{5,35} (appelé BICOVOX 10) ou Bi₂V_{0,9}Cu_{0,1}O_{5,35} (appelé BICUVOX 10)
- Les composés de formule (IIIb) :

   (Bi₂₋ₓ MₓO₂) (VO_{z}) (IIIb)

   correspondant à la formule (III) dans laquelle y est égal à 0 et x est différent de 0, M est tel que défini ci-dessus et est plus particulièrement choisi parmi les terres rares tel que le lanthane.

On peut encore citer parmi les composés de formule (III), ceux dans lesquels l'atome d'oxygène est partiellement substitué par du fluor, ou bien ceux comportant des substitutions mixtes du bismuth et du vanadium. Comme composition de ce type, il y a par exemple les composés de formule (IIIc)

- (Bi₂₋ₓ Pbₓ O₂) (V_{1-y} Mo_{y} O_{z})

De manière générale, lorsque le matériau céramique utilisé est une poudre de composé de la famille des BIMEVOX, la granulométrie moyenne est comprise entre 0,2 et 50 microns.

L'invention a aussi pour objet le procédé tel que défini précédemment, caractérisé en ce que le matériau céramique constitutif de la suspension céramique est choisi parmi les carbures ou les nitrures comme le carbure de silicium, SiC ou le nitrure de silicium Si₃N₄, l'alumine Al₂O₃ les silicates d'aluminium et leurs dérivés comme la mullite (2SiO₂.3Al₂O₃ ), SiAION, ou la cordiérite (Mg₂Al₄Si₅O₁₈), la magnésie (MgO), les phosphates de calcium et ses dérivés comme l'hydroxy apatite [Ca₄ (CaF) (PO₄)₃], le phosphate tricalcique [Ca₃ (PO₄)₂], les oxydes céramliques non dopés tels que la zircone (ZrO₂) ou la cérine, (CeO₂).

Une cellule électrochimique peut comprendre l'électrolyte solide obtenu par le procédé tel que défini ci-dessus.

Une membrane céramique conductrice mixte ionique - électronique, peut comprendre un conducteur mixte ionique - électronique obtenu par le procédé tel que défini ci-dessus.

L'électrolyte solide obtenu par le procédé tel que défini précédemment, peut être utilisé pour extraire l'oxygène d'un mélange gazeux en contenant ou pour analyser la présence d'oxygène dans une atmosphère gazeuse. On peut citer en particulier l'utilisation de l'électrolyte solide obtenu par la variante du procédé telle que définie précédemment, soit pour produire de l'oxygène ultra - pur, soit, pour, dans les applications nécessitant des atmosphères sans oxygène, telle que l'industrie des composants électroniques ou l'industrie alimentaire, éliminer l'oxygène de ladite atmosphère, ladite atmosphère gazeuse se trouvant au dessus d'un solide ou d'un liquide.

C'est pourquoi l'oxygène ultra - pur peut être préparé par séparation de l'oxygène de l'air par conduction ionique à travers une cellule électrochimique telle que définie précédemment et l'oxygène peut être éliminé d'une atmosphère gazeuse dans laquelle sont effectuées des applications nécessitant des atmosphères sans oxygène, consistant en la séparation de l'oxygène de ladite atmosphère, par conduction ionique à travers une cellule électrochimique telle que définie précédemment.
On peut aussi utiliser une membrane céramique telle que définie ci-dessus, pour produire de l'oxygène qui est directement mis en oeuvre dans une réaction chimique, notamment avec l'hydrogène pour produire de l'énergie électrique, par exemple dans une pile à combustible solide de type SOFC ou dans des réactions classiques de la pétrochimie.

C'est pourquoi un procédé de production d'énergie thermique et électrique au sein d'une pile à combustible solide, peut être réalisé par réaction de l'oxygène et de l'hydrogène, pour laquelle ledit oxygène est obtenu en le séparant de l'air, par conduction mixte ionique - électronique à travers une membrane céramique telle que définie précédemment, un procédé de production de gaz de synthèse peut être réalisé par réaction catalytique du gaz naturel de vapeur d'eau et d'oxygène, pour laquelle ledit oxygène est obtenu en le séparant de l'air, par conduction mixte ionique - électronique à travers une membrane céramique telle que définie précédemment, un procédé de production d'oxygène ultra - pur peut être réalisé, en séparant ledit oxygène de l'air, par conduction mixte ionique - électronique, à travers une membrane céramique telle que définie précédemment et un procédé industriel de synthèse d'un composé organique comprenant au moins une étape d'oxydation mettant en oeuvre de l'oxygène gazeux peut - être réalisé, en séparant ledit oxygène de l'air, par conduction mixte ionique - électronique, à travers une membrane céramique, telle que définie précédemment.

Un matériau céramique de faible épaisseur à gradient de porosité superficielle contrôlé préparé par le procédé tel que défini précédemment, peut être utilisé pour préparer des membranes de filtration des gaz ou des liquides, des jonctions céramiques/métal, des biomatériaux ou des capteurs.

Comme matériau céramique utilisé dans ces applications il y a par exemple les carbures ou les nitrures comme le carbure de silicium, SiC ou le nitrure de silicium Si₃N₄, l'alumine Al₂O₃ les silicates d'aluminium et leurs dérivés comme la mullite (2SiO₂.3Al₂O₃ ), SiAION ou la cordiérite (Mg₂Al₄Si₅O₁₈), la magnésie (MgO), les phosphates de calcium et ses dérivés comme l'hydroxy apatite [Ca₄ (CaF) (PO₄)₃], le phosphate tricalcique [Ca₃ (PO₄)₂], les oxydes céramiques non dopés tels que la zircone (ZrO₂) ou la cérine, (CeO₂).

Les figures jointes à cet exposé illustrent l'invention sans toutefois la limiter.

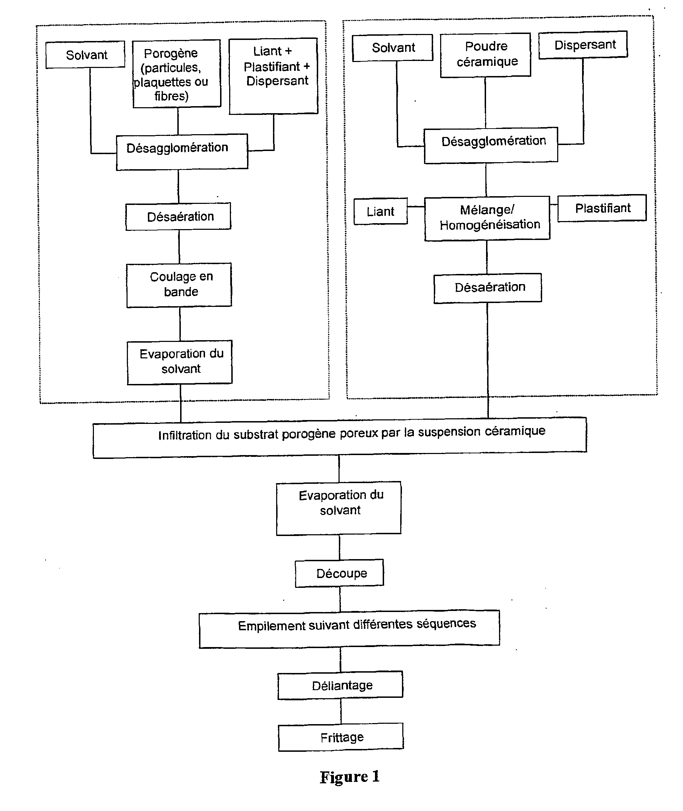

**La** **Figure 1** regroupe les différentes étapes du procédé d'élaboration d'une membrane céramique avec gradient continu de porosité superficielle contrôlé.

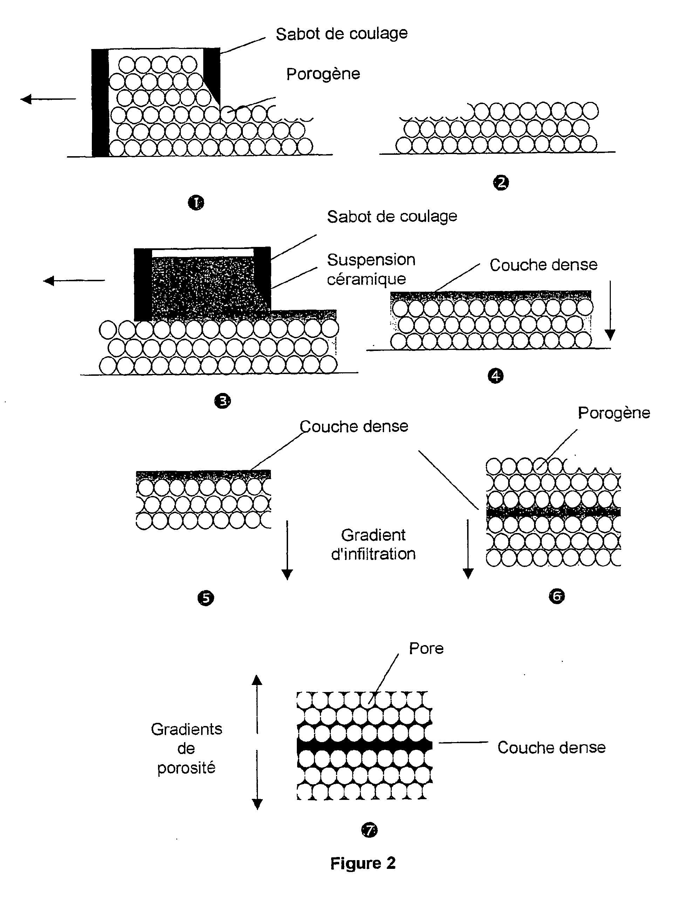

**La** **Figure 2** illustre le procédé d'infiltration par coulage en bande d'un lit de porogène par une suspension céramique. Les étapes sont les suivantes :
① Réalisation d'un substrat porogène poreux par coulage en bande, sur un film plastique souple (Mylar™ par exemple), d'une suspension de particules de porogènes (solvant + porogènes + organiques),
② Evaporation du solvant,
③ Infiltration du substrat porogène poreux par une suspension céramique de viscosité et de comportement rhéologique contrôlés. La viscosité et le comportement rhéologique vont fixer l'infiltration de la suspension dans le substrat porogène poreux et donc le gradient de porosité,
④ Evaporation du solvant,
⑤ Découpe de la bande,
⑥ Empilement, par exemple tête-bêche, pour obtenir un coeur dense et deux surfaces symétriques poreuses et thermocompression,
⑦ Déliantage - frittage.

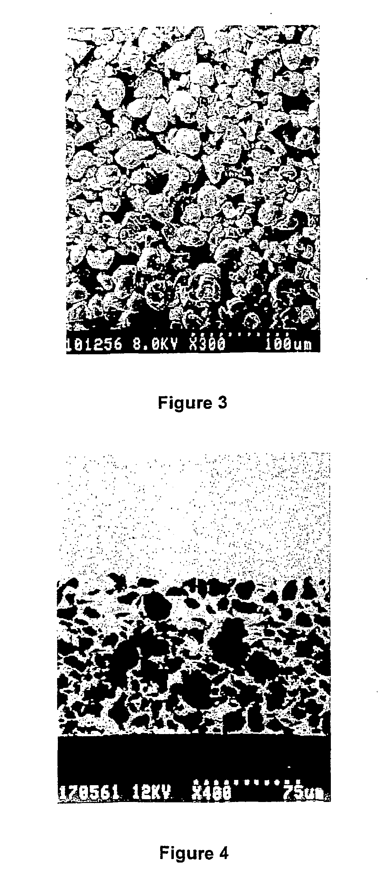

**La** **Figure 3** **:** est une photo obtenue par microscopie électronique à balayage, de la surface d'un substrat porogène poreux consistant en un empilement de particules micronisées de cire de polypropylène de 25µm fabriquées par Micropowder Inc.).

**La** **Figure 4** est une photo obtenue par microscopie électronique à balayage, d'une section polie d'un matériau obtenu par infiltration d'un substrat porogène poreux consistant en un empilement de particules micronisées de cire de polypropylène de 25µm fabriquées par Micropowder Inc), par une suspension de BICOVOX 10. La suspension de BICOVOX. 10 est constituée d'environ de 30 à 50 g de poudre de BICOVOX 10 (taille de grains < 1µm), de 0,2 g à 2 g de dispersant A259™, commercialisé en France par CECA - ATOCHEM, de 0,5 g à 5 g de liant DEGALAN™ 5107, commercialisé en France par DEGUSSA - HUELS et de 0,5 g à 5 g de phtalate de dibutyle, dans un mélange méthyl éthyl cétone/éthanol de façon que le rapport volumique, matière sèche sur volume de solvant, soit compris entre 25% et 35%.

La porosité totale de la zone poreuse est estimée à 60% par analyse d'images. On observe que la membrane céramique de faible épaisseur (entre 150 µm et 250 µm) obtenue par ce procédé, possède un gradient continu de porosité superficielle contrôlé et une continuité entre zone dense et zone poreuse évitant les délaminations ou décollements entre les matériaux dense et poreux au cours du frittage.

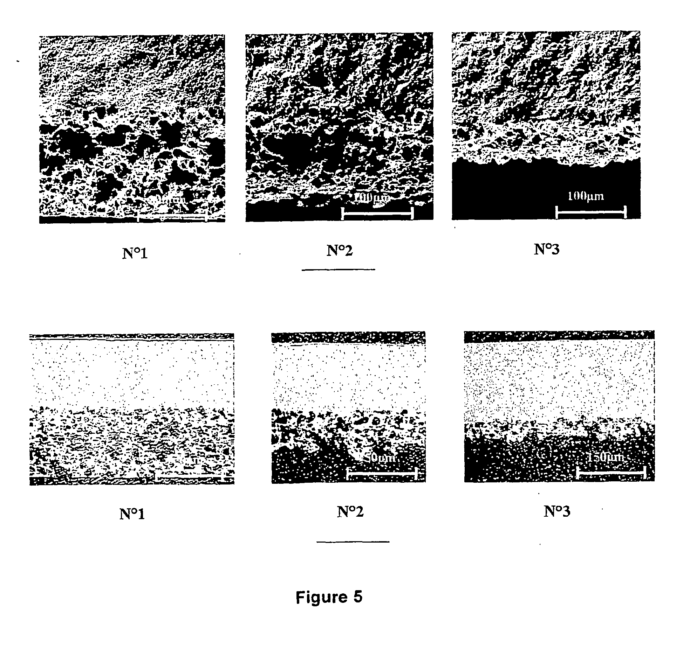

**La** **Figure 5** recense différentes photos obtenues par microscopie électronique à balayage de sections fracturées et polies de matériaux frittés, qui illustrent l'effet de la composition du substrat porogène poreux, constitué d'un empilement de particules micronisées de cire de polypropylène de 25 µm, sur l'infiltration par la suspension céramique de coulage en bande (particules de BICOVOX.10 <1µm) préparée ci dessus.

Les proportions volumiques des différentes phases dans le substrat porogène poreux sont consignées dans le tableau suivant :

| | | Numéros des photos | | |
|---|---|---|---|---|
| | | 1 | 2 | 3 |
| composition volumique (%) | solvant + cire de polypropylène | 100% | 95% | 90% |
| | liant | 0% | 2,5% | 5% |
| | plastifiant | 0% | 2,5% | 5% |

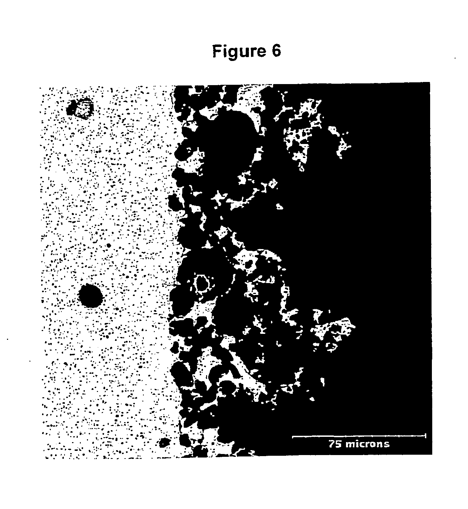

**La** **Figure 6** est une photo obtenue par microscopie électronique à balayage, d'une section polie d'un matériau fritté obtenu par infiltration d'un substrat porogène poreux constitué de différents types de porogènes par une suspension de BICUVOX.10.

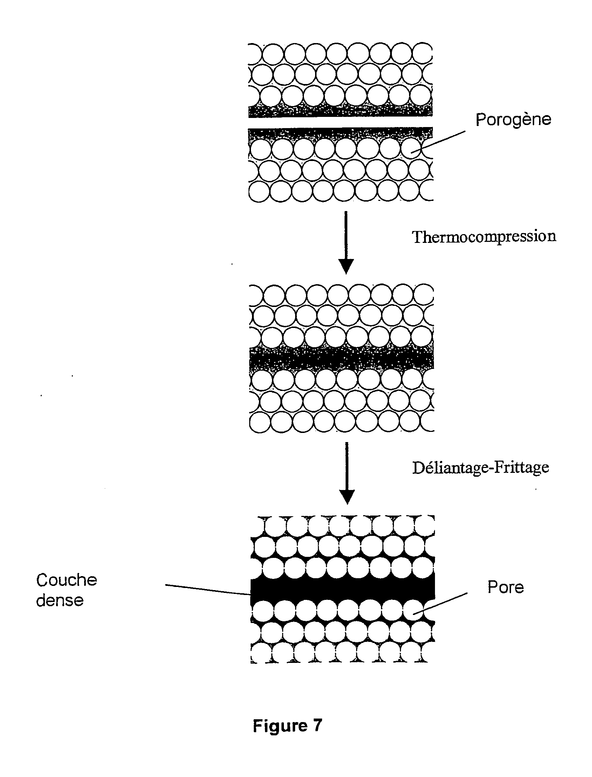

**La** **Figure 7** illustre la fabrication d'éléments multicouches poreux / dense / poreux par thermocompression en cru, d'un empilement de 2 bandes tête-bêche. Par le procédé d'élaboration mis en oeuvre, il est possible de réaliser des multicouches poreux / dense / poreux à gradient continu de porosité contrôlé.

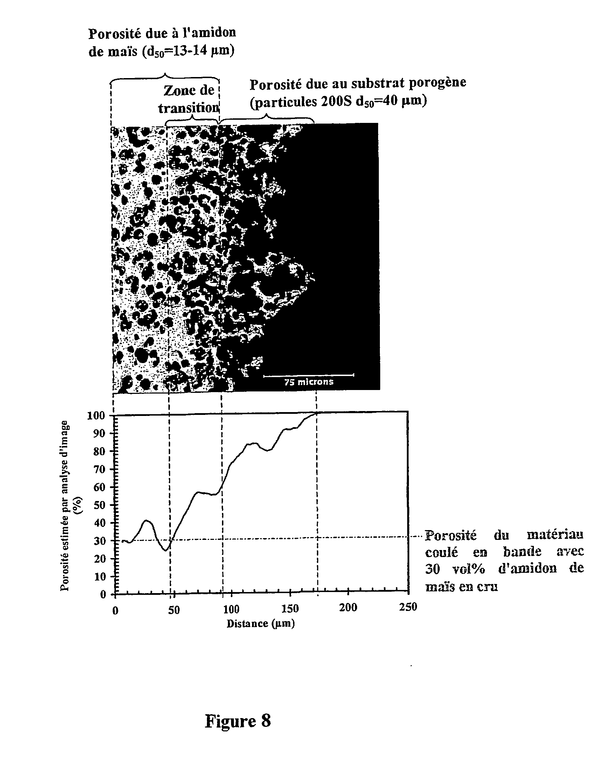

**La** **Figure 8** est une photo obtenue par microscopie électronique à balayage couplée à une analyse d'image de BICUVOX.10 ayant un gradient de porosité superficielle contrôlé, obtenu par infiltration de PropylTex^{™} 200S par une suspension de BICUVOX.10 contenant 30 vol% d'amidon de maïs.

## Revendications

1. Procédé de préparation d'un matériau céramique de faible épaisseur à gradient de porosité superficielle contrôlé, **caractérisé en ce qu'**il comprend :
a) une étape (P) de préparation d'un substrat porogène poreux et d'épaisseur contrôlée ;
b) une étape (Q) de préparation d'une suspension céramique ;
c) une étape (A) d'infiltration du substrat porogène poreux, par ladite suspension d'un matériau céramique ;
d) une étape (B) d'évaporation du solvant, pour former une structure composite (S) porogène/céramique solide ;
e) une étape de découpe (B') de la structure composite (S) issue de l'étape (B) en éléments de structure (s) ;
f) une étape (E) de formation d'un ensemble à partir de deux éléments (s1) et (s2) obtenus à l'étape (B'), dans lequel lesdits éléments sont empilés tête-bêche, leur faces denses étant adjacentes ;
g) une étape de thermocompression de l'ensemble obtenu à l'étape (E) ;
h) une étape (C) de déliantage, et
i) une étape (D) de frittage.

2. Procédé tel que défini à la revendication 1, dans lequel les étapes (C) et (D) sont réalisée en une seule étape (C').

3. Procédé tel que défini à l'une des revendications 1 ou 2, dans lequel la préparation du substrat porogène poreux solide comprend :
- Une étape (Pₐ), de préparation d'une suspension d'un ou plusieurs porogènes solides dans un solvant, en présence si nécessaire, de liants, de plastifiants et/ou de dispersants et avec ajout si désiré, d'une faible proportion de particules céramiques ;
- Une étape (P_{b}), de coulage de ladite suspension formée à l'étape (Pₐ) sur une surface plane, et
- une étape (P_{c}), d'évaporation dudit solvant.

4. Procédé tel que défini à la revendication 3, dans lequel l'étape (P_{b}) est précédée d'une étape de désagglomération (P_{d}), des particules porogènes dans ladite suspension formée à l'étape (Pₐ), suivie éventuellement d'une étape (Pₐ), de désaération de ladite suspension.

5. Procédé tel que défini à l'une des revendications 1 à 4, dans lequel la préparation de la suspension céramique comprend :
- Une étape (Qₐ), de préparation d'une suspension de particules de céramique solides dans un solvant en présence d'un dispersant ;
- Une étape (Q_{b}), d'addition dans la suspension préparée à l'étape (Qₐ), d'un liant et éventuellement d'un plastifiant.

6. Procédé tel que défini à la revendication 5, dans lequel l'étape (Q_{b}) est précédée d'une étape de désagglomération (Q_{c}), de la suspension préparée à l'étape (Q_{b}).

7. Procédé tel que défini à l'une des revendications 5 ou 6, dans lequel l'étape (Q_{b}) est suivie d'une étape (Q_{d}), de désaération de ladite suspension.

8. Procédé tel que défini à l'une des revendications 1 à 7, dans lequel les éléments (s) obtenus sont de forme et de dimensions identiques.

9. Procédé tel que défini à l'une des revendications 1 à 8, **caractérisé en ce que** le matériau céramique constitutif de la suspension céramique est choisi parmi les oxydes céramiques dopés qui, à la température d'utilisation se présentent sous forme d'un réseau cristallin présentant des lacunes en ions oxydes et plus particulièrement sous forme de phase cubique, de phase fluorite, de phase pérovskite, de type Aurivillius, de phase brown-millerite ou de phase pyrochlore.

10. Procédé tel que défini à la revendication 9, **caractérisé en ce que** le matériau céramique constitutif de la suspension céramique est choisi parmi les oxydes de formule (I) :
- Les oxydes de formule (I) :
(MₐO_{b})₁₋ₓ (R_{c}O_{c})ₓ (I),
dans laquelle M représente au moins un atome trivalent ou tétravalent principalement choisi parmi, le bismuth (Bi), le cérium (Ce), le zirconium (Zr), le thorium (Th), le gallium (Ga) ou l'hafnium (Hf), a et b sont tels que la structure MₐO_{b} est électriquement neutre, R représente au moins un atome divalent ou trivalent choisi principalement parmi le magnésium (Mg), le calcium (Ca) ou le baryum (Ba), le strontium (Sr), le gadolinium (Gd), le scandium (Sc), l'ytterbium (Yb), l'yttrium (Y), le samarium (Sm) l'erbium (Er), l'indium (In), le niobium (Nb) ou le lanthane (La), c et d sont tels que la structure R_{c}O_{d} est électriquement neutre, x est généralement compris entre 0,05 et 0,30 et plus particulièrement, entre 0, 075 et 0,15.

11. Procédé tel que défini à la revendication 10, **caractérisé en ce que** le matériau céramique constitutif de la suspension céramique est choisi parmi les zircones, les gallates ou les oxydes de cérium stabilisés comme, par exemple, la zircone stabilisée de formule (Ia) :
(2rO₂)₁₋ₓ (Y₂O₃)ₓ, (Ia),
dans laquelle x est compris entre 0,05 et 0,15.

12. Procédé tel que défini à la revendication 9, **caractérisé en ce que** le matériau céramique constitutif de la suspension céramique est choisi parmi les matériaux pérovskites, de formule (II) :
M₁M_{z}O₃, (II)
dans laquelle, M₁ représente un ou plusieurs atomes choisis dans les familles des alcalino-terreux, des lanthanides et des actinides et plus particulièrement parmi La, Ce, Pr, Nd, Pm, Sm, Eu, Gd, Tb, Dy, Ho, Er, Tm, Yb, Lu, Y, ou les Mg, Ca, Sr ou Ba, M₂ représente un ou plusieurs atomes choisis les métaux de transition, plus particulièrement parmi Sc, Ti, V, Cr, Mn, Fe, Co, Ni, Cu ou Zn.

13. Procédé tel que défini à la revendication 12, **caractérisé en ce que** le matériau céramique constitutif de la suspension céramique est choisi parmi l'oxyde de lanthane et de nickel (LaNi0₃), les manganites - lanthane - calcium (CaᵤLaᵥMnO_{w}), les manganites - lanthane - strontium (LaᵤSrᵥMnO_{w}), les cobaltites - lanthane - strontium (LaᵤSrᵥCoO_{w}), les cobaltites - lanthane - calcium (CaᵤLaᵥ-CoO_{w}), les cobaltites - gadolinium - strontium (GdᵤSr_{y}CoO_{w}), les chromites - lanthane - strontium (LaᵤSrᵥCrO_{w}), les ferrites - lanthane - strontium, (LaᵤSrᵥFeO_{w}) ou les ferrocobaltites - lanthane - strontium (LaᵤSrᵥCo_{d}Fe_{c}O_{w}), composés pour lesquels les sommes u + v et c + d sont égales à 1 et w est tel que la structure en cause est électriquement neutre, et est plus particulièrement un composé de formule (IIa) :
La_{0,6}Sr_{0,4}Co_{0,8}Fe_{0,2}O_{w} (IIa),
dans laquelle w est tel que la structure de formule (IIa), est électriquement neutre.

14. Procédé tel que défini à la revendication 9, **caractérisé en ce que** le matériau céramique constitutif de la suspension céramique est choisi parmi les composés de formule (III) :
(Bi₂₋ₓMₓO₂)(V_{1-y}M'_{y}O_{z}) (III)
dans laquelle M représente un ou plusieurs métaux de substitution du bismuth, choisi(s) parmi ceux ayant un nombre d'oxydation inférieur ou égal à 3, M' représente un ou plusieurs éléments de substitution du vanadium choisi(s) parmi ceux ayant un nombre d'oxydation Inférieur, égal ou supérieur à 5, les valeurs limites de x, y et donc z étant dépendants de la nature des éléments de substitution M et M'.

15. Procédé tel que défini à la revendication 14, **caractérisé en ce que** le matériau céramique constitutif de la suspension céramique est choisi parmi les composés de formule (IIIa) :
(Bi₂O₂) (V_{I-}yM'_{y}O_{z}) (IIIa)
correspondant à la formule (III) dans laquelle x est égal à 0, y est différent de 0 et M' est choisi parmi les métaux alcalins, alcalino-terreux, les métaux de transition, ou encore les éléments des groupes III à V de la classification périodique, ou parmi les terres rares et est plus particulièrement choisi entre Bi₂V_{0,9}Co_{0.1}O_{5.35} et Bi₂V_{0,9}Cu_{0,1}O_{5,35}.

16. Procédé tel que défini à la revendication 15, **caractérisé en ce que** le matériau céramique constitutif de la suspension céramique est choisi parmi les composés de formule (IIIb) :
(Bi_{2- x} O₂) (VO_{z}) (IIIb)
correspondant à la formule (III) dans laquelle y est égal à 0, x est différent de 0 et M est choisi parmi les terres rares et représente plus particulièrement le lanthane.

17. Procédé tel que défini à l'une des revendications 1 à 8, **caractérisé en ce que** le matériau céramique constitutif de la suspension céramique est choisi parmi les carbures ou les nitrures comme la carbure de silicium, SiC ou le nitrure de silicium Si₃Nₐ, l'alumine Al₂O₃ les silicates d'aluminium et leurs dérivés comme la mullite (2SiO₂.3Al₂O₃ ), SiAION ou la cordiérite (Mg₂Al₄Si₅O₁₈), la magnésie (MgO), les phosphates de calcium et ses dérivés comme l'hydroxy apatite [Ca₄ (CaF) (PO₄)₃], le phosphate tricalcique [Ca₃ (PO₄)₂], les oxydes céramiques non dopés tels que la zircone (ZrO₂) ou la cérine, (CeO₂).

## Claims

1. Method for preparing a ceramic material of low thickness having a controlled surface porosity gradient, **characterised in that** said method comprises:
a) a step (P) of preparing a porous, pore-forming substrate of controlled thickness;
b) a step (Q) of preparing a ceramic suspension;
c) a step (A) of infiltrating the porous, pore-forming substrate with said suspension of a ceramic material;
d) a step (B) of evaporating the solvent to form a solid, pore-forming/ceramic composite structure (S);
e) a step of cutting (B') the composite structure (S) from step (B) into structural elements (s);
f) a step (E) of forming an assembly from two elements (s1) and (s2) obtained in step (B'), wherein said elements are stacked head to tail, their dense faces being adjacent;
g) a step of thermocompressing the assembly obtained in step (E);
h) a debinding step (C), and
i) a sintering step (D).

2. Method according to claim 1, wherein steps (C) and (D) are carried out in a single step (C').

3. Method according to either claim 1 or claim 2, wherein the preparation of the solid, porous, pore-forming substrate comprises:
- a step (Pₐ) of preparing a suspension of one or more pore-forming solids in a solvent, if necessary in the presence of binders, plasticisers and/or dispersants and if desired with the addition of a low proportion of ceramic particles;
- a step (P_{b}) of pouring said suspension formed in step (Pₐ) onto a planar surface, and
- a step (P_{c}) of evaporating said solvent.

4. Method according to claim 3, wherein step (P_{b}) is preceded by a step of deagglomerating (P_{d}) pore-forming particles in said suspension formed in step (Pₐ), optionally followed by a step (Pₑ) of deaerating said suspension.

5. Method according to any one of claims 1 to 4, wherein the preparation of the ceramic suspension comprises:
- a step (Qₐ) of preparing a suspension of solid ceramic particles in a solvent in the presence of a dispersant;
- a step (Q_{b}) of adding a binder and optionally a plasticiser to the suspension prepared in step (Qₐ).

6. Method according to claim 5, wherein step (Q_{b}) is preceded by a step of deagglomerating (Q_{d}) the suspension prepared in step (Q_{b}).

7. Method according to either claim 5 or claim 6, wherein step (Q_{b}) is followed by a (Q_{d}) of deaerating said suspension.

8. Method according to any one of claims 1 to 7, wherein the elements (s) obtained are of identical form and dimensions.

9. Method according to any one of claims 1 to 8, **characterised in that** the ceramic material of the ceramic suspension is selected from the doped ceramic oxides which, at the temperature of use, are in the form of a crystal lattice having oxide ion vacancies and more particularly in the form of cubic phase, fluorite phase, Aurivillius-type perovskite phase, brownmillerite phase or pyrochlore phase.

10. Method according to claim 9, **characterised in that** the ceramic material of the ceramic suspension is selected from the oxides of formula (I):
- the oxides of formula (I):
(MₐO_{b})₁₋ₓ(R_{c}O_{d})ₓ (I),
wherein M represents at least one trivalent or tetravalent atom selected principally from bismuth (Bi), cerium (Ce), zirconium (Zr), thorium (Th), gallium (Ga) or hafnium (Hf), a and b are such that the structure MₐO_{b} is electrically neutral, R represents at least one divalent or trivalent atom selected principally from magnesium (Mg), calcium (Ca) or barium (Ba), strontium (Sr), gadolinium (Gd), scandium (Sc), ytterbium (Yb), yttrium (Y), samarium (Sm), erbium (Er), indium (In), niobium (Nb) or lanthanum (La), c and d are such that the structure R_{c}O_{d} is electrically neutral, x is generally between 0.05 and 0.30 and more particularly between 0.075 and 0.15.

11. Method according to claim 10, **characterised in that** the ceramic material of the ceramic suspension is selected from the zirconias, the gallates or the stabilised cerium oxides, for example stabilised zirconia of formula (Ia):
(ZrO₂)₁₋ₓ(Y₂O₃)ₓ₁ (Ia),
wherein x is between 0.05 and 0.15.

12. Method according to claim 9, **characterised in that** the ceramic material of the ceramic suspension is selected from the perovskite materials of formula (II):
M₁M₂O₃ (II),
wherein M₁ represents one or more atoms selected from the families of the alkaline earths, the lanthanides and the actinides and more particularly from La, Ce, Pr, Nd, Pm, Sm, Eu, Gd, Tb, Dy, Ho, Er, Tm, Yb, Lu, Y or Mg, Ca, Sr or Ba, M₂ represents one or more atoms selected from the transition metals, more particularly from Sc, Ti, V, Cr, Mn, Fe, Co, Ni, Cu or Zn.

13. Method according to claim 12, **characterised in that** the ceramic material of the ceramic suspension is selected from lanthanum nickel oxide (LaNiO₃), the lanthanum calcium manganites (CaᵤLaᵥMnO_{w}), the lanthanum strontium manganites (LaᵤSrᵥMnO_{w}), the lanthanum strontium cobaltites (LaᵤSrᵥCoO_{w}), the lanthanum calcium cobaltites (CaᵤLaᵥCoO_{w}), the gadolinium strontium cobaltites (GdᵤSr_{y}CoO_{w}), the lanthanum strontium chromites (LaᵤSrᵥCrO_{w}), the lanthanum strontium ferrites (LaᵤSrᵥFeO_{w}) or the lanthanum strontium ferrocobaltites (LaᵤSrᵥCO_{d}Fe_{c}O_{w}), for which compounds the sums u + v and c + d are equal to 1 and w is such that the structure in question is electrically neutral, and is more particularly a compound of formula (IIa):
La_{0.6}Sr_{0.4}Co_{0.8}Fe_{0.2}O_{W} (IIa),
wherein w is such that the structure of formula (IIa) is electrically neutral.

14. Method according to claim 9, **characterised in that** the ceramic material of the ceramic suspension is selected from the compounds of formula (III):
(Bi₂₋ₓMₓO₂) (V_{1-y}M'_{y}O_{z}) (III),
wherein M represents one or more metals substituting for bismuth, selected from those having an oxidation number less than or equal to 3, M' represents one or more elements substituting for vanadium, selected from those having an oxidation number less than, equal to or greater than 5, the threshold values of x, y and thus z being dependent on the nature of the substituting elements M and M'.

15. Method according to claim 14, **characterised in that** the ceramic material of the ceramic suspension is selected from the compounds of formula (IIIa):
(Bi₂O₂)(V₁₋yM'_{y}O_{z}) (IIIa)
corresponding to formula (III) wherein x is equal to 0, y is different from 0 and M' is selected from the alkali metals, alkaline earths, the transition metals or the elements of groups III to V of the periodic table or from the rare earths and is more particularly selected from Bi₂V_{0.9}Co_{0.1}O_{5.35} and Bi₂V_{0.9}Cu_{0.1}0_{5.35}.

16. Method according to claim 15, **characterised in that** the ceramic material of the ceramic suspension is selected from the compounds of formula (IIIb):
(Bi₂₋ₓMₓO₂)(VO_{z}) (IIIb)
corresponding to formula (III) wherein y is equal to 0, x is different from 0 and M is selected from the rare earths and more particularly represents lanthanum.

17. Method according to any one of claims 1 to 8, **characterised in that** the ceramic material of the ceramic suspension is selected from the carbides or the nitrides, such as silicium carbide SiC or silicium nitride Si₃N₄, alumina Al₂O₃, the aluminium silicates and their derivatives such as mullite (2SiO₂.3Al₂O₃), SiAION or cordierite (Mg₂Al₄Si₅O₁₈), magnesia (MgO), the calcium phosphates and their derivatives such as hydroxyapatite [Ca₄ (CaF) (PO₄)₃], tricalcium phosphate [Ca₃ (PO₄)₂], the undoped ceramic oxides such as zirconia (ZrO₂) or cerine (CeO₂).

## Patentansprüche

1. Verfahren zur Zubereitung eines keramischen Werkstoffs mit geringer Dicke mit kontrolliertem Oberflächen-Porositätsgradienten, **dadurch gekennzeichnet, dass** es Folgendes umfasst:
a) einen Schritt (P) der Zubereitung eines porösen porogenen Substrats mit kontrollierter Dicke;
b) einen Schritt (Q) der Zubereitung einer keramischen Suspension;
c) einen Schritt (A) der Infiltration des porösen porogenen Substrats durch die Suspension eines keramischen Werkstoffs;
d) einen Schritt (B) der Verdampfung des Lösungsmittels, um ein solides porogenes/keramisches Verbundgefüge (S) zu bilden;
e) einen Schritt des Zerschneidens (B') des aus Schritt (B) hervorgegangenen Verbundgefüges (S) in Gefügeelemente (s);
f) einen Schritt (E) der Bildung einer Anordnung aus zwei aus Schritt (B') erhaltenen Elementen (s1) und (s2), wobei die Elemente in entgegengesetzter Richtung aufeinander geschichtet werden, wobei ihre dichten Flächen aneinanderstoßen;
g) einen Schritt der Thermokompression der aus Schritt (E) erhaltenen Anordnung;
h) einen Schritt (C) der Entbinderung und
i) einen Schritt (D) der Sinterung.

2. Verfahren wie in Anspruch 1 definiert, wobei die Schritte (C) und (D) in einem einzigen Schritt (C') realisiert werden.

3. Verfahren wie in einem der Ansprüche 1 oder 2 definiert, wobei die Zubereitung des soliden porösen porogenen Substrats Folgendes umfasst:
- einen Schritt (Pₐ) der Zubereitung einer Suspension einer oder mehrere solider Porogene in einem Lösungsmittel, erforderlichenfalls in Gegenwart von Bindemitteln, Plastifizierungsmitteln und/oder Dispersionsmitteln und, falls gewünscht, unter Zugabe eines geringen Anteils keramischer Partikel;
- einen Schritt (P_{b}) des Gießens der in Schritt (Pₐ) gebildeten Suspension auf eine ebene Oberfläche und
- einen Schritt (P_{c}) der Verdampfung des Lösungsmittels.

4. Verfahren wie in Anspruch 3 definiert, wobei Schritt (P_{b}) ein Schritt der Desagglomeration (P_{d}) der porogenen Partikel in der in Schritt (Pₐ) gebildeten Suspension vorangeht, dem gegebenenfalls ein Schritt (Pₑ) der Entlüftung der Suspension folgt.

5. Verfahren wie in einem der Ansprüche 1 bis 4 definiert, wobei die Zubereitung der keramischen Suspension Folgendes umfasst:
- einen Schritt (Qₐ) der Zubereitung einer Suspension solider Keramikpartikel in einem Lösungsmittel in Gegenwart eines Dispersionsmittels;
- einen Schritt (Q_{b}) der Zugabe eines Bindemittels und gegebenenfalls eines Plastifizierungsmittels in die in Schritt (Qₐ) zubereitetete Suspension.

6. Verfahren wie in Anspruch 5 definiert, wobei Schritt (Q_{b}) ein Schritt der Desagglomeration (Q_{c}) der in Schritt (Q_{b}) zubereiteten Suspension vorausgeht.

7. Verfahren wie in einem der Ansprüche 5 oder 6 definiert, wobei Schritt (Q_{b}) ein Schritt (Q_{d}) der Entlüftung der Suspension folgt.

8. Verfahren wie in einem der Ansprüche 1 bis 7 definiert, wobei die erhaltenen Elemente (s) eine identische Form und identische Abmessungen haben.

9. Verfahren wie in einem der Ansprüche 1 bis 8 definiert, **dadurch gekennzeichnet, dass** der keramische Werkstoff, aus dem die keramische Suspension besteht, gewählt ist unter den dotierten keramischen Oxiden, die bei Einsatztemperatur in Form eines kristallinen Netzes vorliegen, das Lücken in Oxidionen aufweist und insbesondere in Form einer kubischen Phase, Fluoritphase, Perovskitphase, vom Typ Aurivillius, einer Brown-Millerit-Phase oder einer Pyrochlorphase.

10. Verfahren wie in Anspruch 9 definiert, **dadurch gekennzeichnet, dass** der keramische Werkstoff, aus dem die keramische Suspension besteht, gewählt ist unter den Oxiden der Formel (I):
- Die Oxide der Formel (I)
(MₐO_{b})₁₋ₓ(R_{c}O_{d})ₓ (I),
wobei M zumindest ein dreiwertiges oder vierwertiges Atom repräsentiert, das im Wesentlichen gewählt ist unter Bismuth (Bi), Cerium (Ce), Zirkonium (Zr), Thorium (Th), Gallium (Ga) oder Hafnium (Hf), a und b dergestalt sind, dass das Gefüge MₐO_{b} elektrisch neutral ist, R zumindest ein zweiwertiges oder dreiwertiges Atom repräsentiert, das im Wesentlichen gewählt ist unter Magnesium (Mg), Calcium (Ca) oder Baryum (Ba), Strontium (Sr), Gadolinium (Gd), Scandium (Sc), Ytterbium (Yb), Yttrium (Y), Samarium (Sm), Erbium (Er), Indium (In), Niobium (Nb) oder Lanthan (La), c und d dergestalt sind, dass das Gefüge R_{c}O_{d} elektrisch neutral ist, x im Allgemeinen zwischen 0,05 und 0,30 und insbesondere zwischen 0,075 und 0,15 beträgt.

11. Verfahren wie in Anspruch 10 definiert, **dadurch gekennzeichnet, dass** der keramische Werkstoff, aus dem die keramische Suspension besteht, gewählt ist unter den stabilisierten Zirkonen, Gallaten oder Ceriumoxiden wie, beispielsweise, dem stabilisierten Zirkon der Formel (Ia):
(ZrO₂)₁₋ₓ(Y₂O₃)ₓ, (Ia),
wobei x zwischen 0,05 und 0,15 beträgt.

12. Verfahren wie in Anspruch 9 definiert, **dadurch gekennzeichnet, dass** der keramische Werkstoff, aus dem die keramische Suspension besteht, gewählt ist unter den Perovskit-Werkstoffen der Formel (II):
M₁M₂O_{3,} (II)
wobei M₁ ein oder mehrere Atome repräsentiert, die gewählt sind in den Familien der Erdalkalis, der Lanthanide und der Aktinide und insbesondere unter La, Ce, Pr, Nd, Pm, Sm, Eu, Gd, Tb, Dy, Ho, Er, Tm, Yb, Lu, Y oder Mg, Ca, Sr oder Ba, M₂ ein oder mehrere Atome repräsentiert, die gewählt sind unter den Übergangsmetallen, insbesondere unter Sc, Ti, V, Cr, Mn, Fe, Co, Ni, Cu oder Zn.

13. Verfahren wie in Anspruch 12 definiert, **dadurch gekennzeichnet, dass** der keramische Werkstoff, aus dem die keramische Suspension besteht, gewählt ist unter Lanthan-Nickel-Oxid (LaNiO₃), den Calcium-Lanthan-Manganiten (CaᵤLaᵥMnO_{w}), den Lanthan-Strontium-Manganiten (LaᵤSrᵥMnO_{w}), den Lanthan-Strontium-Cobaltiten (LaᵤSrᵥCoO_{w}), den Calcium-Lanthan-Cobaltiten (CaᵤLaᵥCoO_{w}), den Gadolinium-Strontium-Cobaltiten (GdᵤSrᵥCoO_{w}), den Lanthan-Strontium-Chromiten (LaᵤSrᵥCrO_{w}), den Lanthan-Strontium-Ferriten (LaᵤSrᵥFeO_{w}) oder den Lanthan-Strontium-Ferrocobaltiten (LaᵤSrᵥCo_{d}Fe_{c}O_{w}), Zusammensetzungen, bei denen die Summen aus u + v und c + d gleich 1 sind und w dergestalt ist, dass das gegenständliche Gefüge elektrisch neutral ist, und insbesondere eine Zusammensetzung der Formel (IIa):
La₀,₆Sr₀,₄Co₀,₈Fe₀,₂Ow (IIa),
wobei w dergestalt ist, dass das Gefüge der Formel (IIa) elektrisch neutral ist.

14. Verfahren wie in Anspruch 9 definiert, **dadurch gekennzeichnet, dass** der keramische Werkstoff, aus dem die keramische Suspension besteht, gewählt ist unter den Zusammensetzungen der Formel (III):
(Bi₂₋xMₓO₂)(V₁₋yM'_{y}O_{z}) (III)
wobei M ein oder mehrere Ersatzmetalle für Bismuth repräsentiert, das bzw. die unter denen gewählt ist bzw. sind, die eine Oxidationszahl kleiner oder gleich 3 haben, M' ein oder mehrere Ersatzelemente für Vanadium repräsentiert, das bzw. die unter denen gewählt ist bzw. sind, die eine Oxidationszahl kleiner oder gleich 5 haben, wobei die Grenzwerte x, y und somit z von der Beschaffenheit der Ersatzelemente M und M' abhängen.

15. Verfahren wie in Anspruch 14 definiert, **dadurch gekennzeichnet, dass** der keramische Werkstoff, aus dem die keramische Suspension besteht, gewählt ist unter den Zusammensetzungen der Formel (IIIa):
(Bi₂O₂(V_{1-y}M'_{y}O_{z}) (IIIa)
die der Formel (III) entspricht, wobei x gleich 0, y ungleich 0 und M' gewählt ist unter den Alkalimetallen, den Erdalkalimetallen, den Übergangsmetallen oder auch den Elementen der Gruppen III bis V des Periodensystems oder unter den Seltenen Erden und insbesondere unter Bi₂\/_{0,9}Co₀,₁O₅,₃₅ Und Bi₂\/_{0,9}Cu₀,₁O₅,₃₅.

16. Verfahren wie in Anspruch 15 definiert, **dadurch gekennzeichnet, dass** der keramische Werkstoff, aus dem die keramische Suspension besteht, gewählt ist unter den Zusammensetzungen der Formel (IIIb):
(Bi₂₋ₓMₓO₂)(VO₂) (IIIb)
die der Formel (III) entspricht, wobei y gleich 0, x ungleich 0 und M gewählt ist unter den Seltenen Erden und insbesondere Lanthan repräsentiert.

17. Verfahren wie in einem der Ansprüche 1 bis 8 definiert, **dadurch gekennzeichnet, dass** der keramische Werkstoff, aus dem die keramische Suspension besteht, gewählt ist unter den Carbiden oder den Nitriden, wie Siliziumcarbid, SiC oder Siliziumnitrid Si₃N₄, Aluminiumoxid Al₂O₃, den Siliziumsilikaten und deren Derivaten wie Mullit (2SiO₂ 3Al₂O₃), SiAION oder Cordierit (Mg₂Al₄Si₅O₁₈), Magnesia (MgO), den Calciumphospaten und deren Derivaten wie Hydroxyapatit (Ca₄ (CaF) (PO₄)₃], Calciumtriphosphat [Ca₃ (PO₄)₂], undotierte Keramikoxide wie Zirkon (ZrO₂) oder Cerin (CeO₂).
